Europäisches Patentamt

European Patent Office

Office européen des brevets

(19)

(11) **EP 0 495 244 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int Cl.[6]: **E02D 19/18**

(21) Anmeldenummer: **91122133.1**

(22) Anmeldetag: **23.12.1991**

(54) **Verfahren zur Herstellung einer Dichtungsschlitzwand**

Method for building a sealing trench wall

Méthode pour produire une paroi étanche, moulée en tranchée

(84) Benannte Vertragsstaaten:
**AT BE CH DE DK FR IT LI LU NL**

(30) Priorität: **15.01.1991 DE 4101015**

(43) Veröffentlichungstag der Anmeldung:
**22.07.1992 Patentblatt 1992/30**

(73) Patentinhaber: **DYCKERHOFF AKTIENGESELLSCHAFT**
**D-65203 Wiesbaden (DE)**

(72) Erfinder:
 • **Der Erfinder hat auf seine Nennung verzichtet.**

(74) Vertreter: **Patentanwälte Dr. Solf & Zapf**
**Candidplatz 15**
**D-81543 München (DE)**

(56) Entgegenhaltungen:
DE-A- 3 633 736          US-A- 2 757 514
US-A- 3 385 068

 • WORLD PATENTS INDEX Section Ch, Week 8011, Derwent Publications Ltd., London, GB; Class L, AN 80-19574C & JP-A-55 006 594 (DENKI KAGAKU KOGYO) 18.Februar 1980
 • WORLD PATENTS INDEX LATEST Section Ch, Week 8619, Derwent Publications Ltd., London, GB; Class L, AN 86-123206 & JP-A-61 063 559 (SHIMODA GIJUTSU) 1.April 1986
 • WORLD PATENTS INDEX LATEST Section Ch, Week 8116, Derwent Publications Ltd., London, GB; Class L, AN 81-27982D & JP-A-56 018 683 (KONOIKE-GUMI) 21.Februar 1981

**Beschreibung**

Die Erfindung betrifft ein Verfahren zur Herstellung einer Dichtungsschlitzwand nach dem Einphasenverfahren.

Bei der Herstellung von Dichtungsschlitzwänden werden Dichtwandmassen in Bodenschlitze eingebaut, z. B. als Vertikalelemente von Umschließungsvorhaben zur Verhinderung der Ausbreitung eventueller Bodenverunreinigungen über das Grundwasser oder in Baugruben oder Tagebaubetrieben als Wände zur Verringerung größerer Grundwasserabsenkungen und zu fördernder Grundwassermengen.

Es ist bekannt, Dichtungsschlitzwände nach dem Einphasenvefahren zu erstellen, indem mit einem Greifer-Bagger ein Aushub eines Schlitzes erfolgt, in dem sich eine Bentonit-Zementstützsuspemsion befindet, die während des Aushubs als Stützflüssigkeit dient und nach Beendigung des Aushubs erhärtet und als Dichtmasse wirkt (Meseck, Ruppert, Simons "Herstellung von Dichtungsschlitzwänden im Einphasenverfahren" Tiefbau (1979), S. 601 - S. 605). Für den Fall langer Baggerzeiten wird empfohlen, Abbindeverzögerer zur Bentonit-Zementsuspension zuzusetzen.

Als Nachteil wird hervorgehoben, daß sich die Dichtwandmasse während der Baggerarbeiten oder durch Erosion mit Bodenteilen aus dem Aushubmaterial, z. B., mit Schluff und Sand anreichert, so daß die Suspension dicker wird und die Weiterarbeit behindert. Außerdem hat die Anreicherung mit Sand zur Folge, daß die Durchlässigkeit der Dichtwandmasse erhöht wird. Es wird deshalb empfohlen, die Suspension laufend zu kontrollieren und Grenzwerte einzuhalten, um zu verhindern, daß die Anreicherung überhandnimmt.

Aus der DE-PS 36 33 736 sind Trockenmischungen für die einphasige Herstellung von Dichtungsschlitzwänden bekannt, die im wesentlichen aus quellfähigem Tonmaterial, Hochofenschlacke und Anreger für die Hochofenschlacke bestehen und die bis zu 25 Gewichtsanteile inerte Füllstoffe aufweisen können. Bei der Herstellung der Dichtwandmasse können übliche Zusätze beigegeben werden, die das Fließverhalten während des Mischvorganges, die Konsistenz oder das Abbinden beeinflussen. Der Einfluß der Thixotropie soll geringer sein als bei herkömmlichen Massen.

Beim Zweiphasenverfahren, bei dem während des Aushubs eine Bentonitsuspension als Stützflüssigkeit verwendet wird, die anschließend durch eine selbsterhärtende Bentonit-Zementsuspension verdrängt wird, setzt sich mehr und mehr die Frästechnik für den Aushub durch. Das von den Schneidrädern einer Fräse gelöste und zerkleinerte Bodenmaterial wird im Schlitz mit der Bentonitsuspension vermischt, die Bodenmaterial enthaltende Mischung abgesaugt und in eine Aufbereitungsanlage gepumpt. In dieser Anlage wird das Aushubmaterial von der Bentonitsuspension mit einem sehr aufwendigen System von Rüttelsieben in Kombination mit Zyklonen sorgfältig und langwierig getrennt. Die gereinigte Bentonitsuspension wird anschließend wieder verwendet. Das Aushubmaterial wandert auf eine Deponie. Der Betrieb der Frästechnik mit bekannten Dichtwandmassen, die für die Durchführung des Einphasenverfahrens geeignet sind, scheitert jedes Mal am teilweisen Austrag der dichtenden Anteile (vor allem des Hüttensandes) bei jedem Durchgang durch die üblichen Aufbereitungsanlagen, weshalb das Fräsverfahren derzeit nur im Zweiphasenverfahren einsetzbar ist.

Bei einem aus der DE OS 40 08 207 bekannten, dem Einphasenverfahren angenäherten Verfahren zur Herstellung einer Dichtwand erfolgt der Aushub zunächst in üblicher Weise mit einer Schlitzwandfräse, während der Erdschlitz mit einer Bentonitsuspension gestützt wird. Danach werden Bindemittel und Feststoffe direkt in die Bentonitstützsuspension im Schlitz zugegeben und die Suspension zur Durchmischung mit der Vorderpumpe der Schlitzwandfräse umgepumpt.

Aufgabe der Erfindung ist, ein Verfahren zur Herstellung einer Dichtungsschlitzwand nach dem Einphasenverfahren zu schaffen, mit dem Dichtungsschlitzwände höherer Dichtigkeit, besserer Erosionsstabilität und chemischer Beständigkeit hergestellt werden können, wobei insbesondere relativ geringe Deponiekosten anfallen sollen.

Diese Aufgabe wird durch die Merkmale des Anspruchs 1 gelöst. Vorteilhafte Weiterbildungen der Erfindung werden in den Unteransprüchen gekennzeichnet.

Da erfindungsgemäß beim Aushub des Bodens nicht mit Greifern, sondern nach der Frästechnik mit Aufbereitungsanlage gearbeitet wird, wird der Wiedereinbau der Feinanteile des Bodens in die Schlitzwand erst ermöglicht. Durch die besondere Anpassung der Dichtwandmasse lassen sich überraschend hohe Inertmengen bzw. Bodenfeinanteile ohne Schädigung der erforderlichen Eigenschaften des als Stützsuspension dienenden Frischschlamms und der erhärteten Dichtwandmasse verwenden. Die hochgefüllten Massen weisen eine verbesserte Erosionsstabilität und chemische Beständigkeit auf. Die Durchlässigkeitsbeiwerte sind ebenfalls verbessert.

Überraschend ist, daß Korngrößen des Bodenaushubmaterials bis zu z. B. 1 bis 2 mm keine Probleme bringen, so daß die aus der Frästechnik bekannten, teueren Zyklonabscheider der Aufbereitungsanlage entfallen können. Durch einfache Siebanlagen läßt sich der nicht verwendbare, in der Regel mengenmäßig geringere gröbere Anteil des Bodenaushubmaterials abtrennen und deponieren.

Die Erfindung sieht vor, an gröberem Anteil anhaftenden brauchbaren Schlamm abzuspülen und das Abspülwasser mit Schlamm als Anmachwasser der Dichtwandmasse zuzusetzen. Der die Aufbereitungsanlage verlassende Aushub mit dem gröberen Material ist somit weitestgehend dichtwandmassenfrei und kann schadlos in Baumaßnahmen oder auf einer Bodendeponie abgelagert werden. Für die Zwecke der Erfindung können bekannte Trockenmischungen für die Dichtwandnachfüllmassen verwendet werden. Diese werden - je nach Bedarf - mit einem Chelatbildner für mehrwertige Kationen und/oder einem Dispergiermittel für die Aufnahme von Feinanteilen ($\leq 1$mm) des ausgebauten Bodens

und/oder mit zusätzlich zugegebenen, feinen anderen Inertstoffen wie Kalksteinmehl, Quarzsand, Altglasmehl versetzt.

Die Einstellung der Chelatbildnermenge erfolgt in Abhängigkeit vom Gehalt an aktiven mehrwertigen Kationen, die zum Beispiel aus einem Anreger für in der Trockenmischung vorhandene Hochofenschlacke und/oder aus dem Anmachwasser und/oder aus dem Bodenaushub und/oder aus zusätzlich vorhandenen Inertstoffen stammen können, derart, daß die Verarbeitbarkeit der Suspension bei ausreichend hoher Fließgrenze mindestens 8 Stunden gewährleistet bleibt.

Die Zugabe der Dispergiermittel erfolgt derart, daß die beabsichtigt zugegebenen, feinen Inertstoffe oder die Feinanteile ($\leq$ 1mm) der nicht auf Halde gefahrenen Menge des Bodens bis zu 1.600 kg/m$^3$ so dispergiert werden können, daß die Verarbeitbarkeit (z. B. Pumpen und Durchlauf durch Siebanlagen) des hochgefüllten Schlammes gewährleistet ist.

Geeignete Chelatbildner sind z. B. Polyphosphate oder Hydroxycarbonsäuren, deren Laktone und deren Alkalisalze, insbesondere Natriumgluconat.

Geeignete dispergierende Mittel für die Aufnahme von Feinsanden oder Schluff aus Quarz, Kalkstein oder Tonstein sind z.B. Polyacrylate, insbesondere wasserlösliche Copolymerisate mit M = 1.000 bis 6.000 oder Na-Polyacry-late mit M = 10.000 bis 20.000.

Die Zugabe von Inertfeinem erfolgt, wenn der Bodenaushub nicht ausreichend Feines enthält, um Korn von z.B. 0,2 bis 1 mm in der Schwebe zu halten, und um in grobkörnigen Böden hochgefüllte Massen einbauen zu können.

Für das erfindungsgemäße Verfahren besonders geeignete Trockenmischungen für Dichtwandmassen haben folgende Zusammensetzung:

| | |
|---|---|
| 10 - 30 Mass.-% | aktivierter Ca-Bentonit ("Na-Bentonit") |
| 72 - 90 Mass.-% | Hüttensand (HOS) gemahlen auf 2000 - 6000 cm$^2$/g |
| 1 - 5 Mass.-% | Hüttensand-Anreger wie Zemente, Kalke oder Calciumsulfate |
| 0 - 1 Mass.-% | Chelatbildner für mehrwertige Kationen |
| 0 - 5 Mass.-% | Dispergiermittel für die Aufnahme von Feinanteilen ($\leq$ 1mm) des ausgebauten Bodens oder von zusätzlich zugegebenen feinen Inertstoffen (wie z.B. Kalkstein, Quarzsand, Altglas) |
| 0 - 4 Mass.-% | reaktive Kieselsäure |

Die Trockenmischung wird mit Brauchwasser unter Verwendung angepaßten Einbringens von Scherenergie zu einer Suspension mit Wasser-Dichtwandmischung-Quotienten ($\frac{W}{DWM}$ -Quotienten) von 3,5 - 1,5 verarbeitet. Es erfolgt eine Vermischung mit den Inertanteilen, aus dem Bodenaushub und gegebenenfalls aus einem Inertstoffzusatz derart, daß Wasser-Feststoff-Quotienten ($\frac{W}{F}$ -Quotienten) bis 0,25 erreicht werden, wobei der Feststoffanteil = Dichtwandmischung + Inertanteile ist.

Anhand der schematischen Zeichnung wird das erfindungsgemäße Verfahren im folgenden näher erläutert.

In einem schematisch im Querschnitt abgebildeten Schlitz 1 arbeitet eine an sich bekannte Schlitzwandfräse 2, deren Pumpenanlage 3 ein konstantes Volumen an Ausbaususpension durch ein Rohrleitungssystem 4 in Pfeilrichtung 5 herauspumpt.

Über ein Rohrleitungssystem 6 wird mit einer Pumpenanlage (nicht dargestellt) aus einem mit einem z.B. nicht scherenden Rührwerk 8 ausgerüsteten Mischbehälter 7, dessen Inhalt in etwa homogen gemischt wird, in Pfeilrichtung 9 eine bestimmte Volumenmenge Nachfüllsuspension in den Schlitz 1 hineingepumpt.

Sofern nicht gefräst wird, entspricht die Pumpvolumenmenge der Ausbaususpension der Pumpvolumenmenge der Nachfüllsuspension.

Wenn gefräst wird, wird eine Ausbaususpensionsmenge herausgepumpt, die der Fräskleinmenge, d.h. der gefrästen Bodenmenge entspricht und eine Nachfüllsuspensionsmenge hineingepumpt, die der Fräskleinmenge + dem ausgefrästen Hohlraum im Boden entspricht.

Für den Fall, daß der Boden keine Grobanteile über z.B. 2 mm aufweist, ist es lediglich erforderlich, auf die gewünschte Pumpenleistung abgestellte Mengen abzupumpen und nach Zugabe von DWM wieder hineinzupumpen, was über eine Kontrolle der Schlammlitergewichte 14,19,6 der Suspensionen in den Rohrleitungssystemen erfolgen kann.

Über ein Fördersystem 10 wird ein zweckmäßigerweise scherender Mischer 15 mit einer an sich bekannten Dichtwandmassen-Trockenmischung beschickt, die aus einem Silo 11 abgezogen wird. In den Mischer 15 wird außerdem Brauchwasser über eine Rohrleitung 12 in Pfeilrichtung 13 geleitet. Die scherend gemischte Suspension gelangt aus dem Mischer 15 über ein Rohrleitungssystem 14 in Pfeilrichtung 16 in den Mischbehälter 7.

Die Ausbaususpension wird über das Rohrleitungssystem 4 in eine Siebanlage 17 gepumpt. Der Grobanteil (z.B. Anteile über 2 mm) der Ausbaususpension wird durch die Siebanlage 17 aussortiert und aus der Aufbereitungsanlage bzw. dem Suspensionskreislauf entfernt (Pfeilrichtung 18). Der Grobanteil kann gegebenenfalls für andere Baumaßnahmen Verwendung finden.

Der in der Siebanlage 17 gewonnene Feinkornanteil der Auslaufsuspension wird über ein Rohrleitungssystem 19 in Pfeilrichtung 20 in den Mischbehälter 7 gepumpt; dabei kann ein Teil davon auf eine Deponie befördert werden (Pfeilrichtung 21), wenn zuviel Feinkornanteil anfällt, was z.B. der Fall sein kann, wenn im ausgefrästen Boden kein Grobkorn vorhanden ist oder der Dichtwandmasse ein anderes Inertmaterial zusätzlich zugesetzt werden soll.

Vorteilhaft ist es, von der Wasserrohrleitung 12 eine Rohrleitung 22 abzuzweigen, durch die in Pfeilrichtung 23 Brauchwasser in die Siebanlage 17 geleitet wird, damit z.B. das Grobkorn abgespült werden kann.

Die Kontrolle der Fließfähigkeit der Suspensionen und der Schlammlitergewichte ergibt die jeweilige Zusatzmenge der Chelatbildner bzw. Dispergiermittel bzw. der zusätzlichen Inertstoffe, die z.B. dem Mischbehälter 7 dosiert getrennt zugegeben werden können (Pfeilrichtung 24).

Mit der Erfindung gelingt es somit, ein Einphasenverfahren zur Verfügung zu stellen, das insbesondere geringe Deponiekosten gewährleistet und außerdem wenig Dichtwandmassen-Trockenmischungen erfordert. Es war überraschend, daß erhebliche Mengen an Bodenaushubmaterial wiederverwendet werden können, ohne daß die Dichtigkeit der Dichtungschlitzwände verringert wurde.

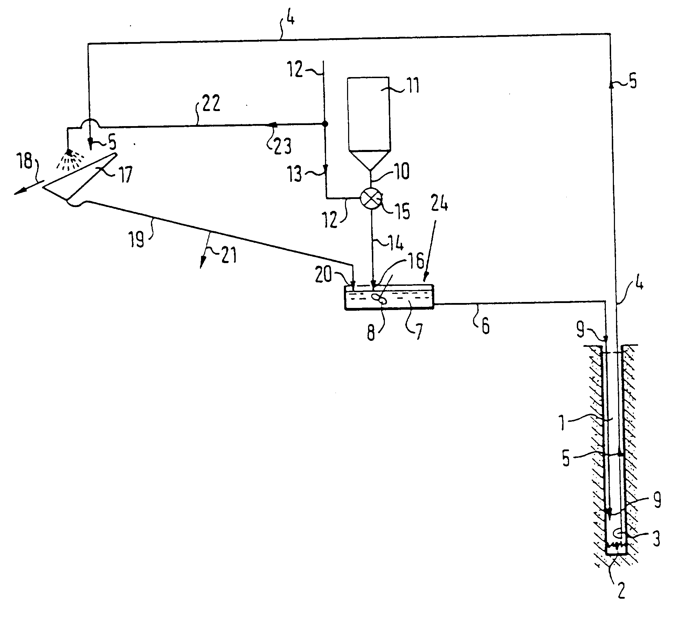

**Patentansprüche**

1.  Verfahren zur Herstellung einer Dichtungsschlitzwand nach dem Einphasenverfahren, wobei das Bodenmaterial aus der Wandung eines mit einer selbsterhärtenden Dichtwand-Massensuspension gefüllten Schlitzes mit einer an sich bekannten Schlitzwandfräse abgetragen und im Gemisch mit der Dichtwand-Massensuspension als Ausbaususpension aus dem Schlitz herausgepumpt wird und der unterhalb einer vorbestimmten Grobkorngröße liegende Feinanteil des Gemisches gemeinsam mit neuer, frischgescherter Dichtwand-Massensuspension zur Herstellung einer Nachfüllsuspension verwendet wird, die in einer der Bodenmaterialabtragung entsprechenden Nachfüllmenge in den Schlitz gepumpt wird.

2.  Verfahren nach Anspruch 1,
    dadurch **gekennzeichnet,**
    daß das aus dem Schlitz gepumpte Gemisch gesiebt wird.

3.  Verfahren nach Anspruch 1, und/oder 2,
    dadurch **gekennzeichnet,**
    daß der Grobkornanteil abgespült und das Spülmaterial dem Feinanteil oder der Nachfüllsuspension zugeführt wird.

4.  Verfahren nach einem der Ansprüche 1 bis 3,
    dadurch **gekennzeichnet,**
    daß eine Nachfüllsuspension verwendet wird, die einen Feinanteil in Mengen von 400 bis 1800 kg/m$^3$ aufweist.

5.  Verfahren nach einem oder mehreren der Ansprüche 1 bis 4,
    dadurch **gekennzeichnet,**
    daß ein Feinanteil verwendet wird, dessen Korngröße unter 2 mm, insbesondere unter 1 mm, liegt.

6.  Verfahren nach einem oder mehreren der Ansprüche 1 bis 5,
    dadurch **gekennzeichnet**,
    daß zusätzliche Inertstoffe als Feinanteile zur Herstellung der Nachfüllsuspension verwendet werden.

7.  Verfahren nach einem oder mehreren der Ansprüche 1 bis 6,
    dadurch **gekennzeichnet,**
    daß bei der Herstellung der Nachfüllsuspension zur Gewährleistung einer ausreichenden Verarbeitbarkeit Chelatbildner in einer vom Gehalt an aktiven, mehrwertigen, in der Nachfüllsuspension vorhandenen Kationen abhängigen Menge verwendet werden.

8.  Verfahren nach Anspruch 7,
    dadurch **gekennzeichnet,**
    daß als Chelatbildner Polyphosphate oder Hydroxycarbonsäuren, deren Laktone und deren Alkalisalze, insbesondere Natriumgluconat verwendet werden.

9.  Verfahren nach einem oder mehreren der Ansprüche 1 bis 8,

dadurch g e k e n n z e i c h n e t,
daß bei der Herstellung der Nachfüllsuspension zur Gewährleistung einer ausreichenden Verarbeitbarkeit Dispergiermittel in einer, vom Gehalt an inerten Feinanteilen abhängigen Menge verwendet werden.

**10.** Verfahren nach Anspruch 9,
dadurch **gekennzeichnet,**
daß bei Verwendung von Feinsanden oder Schluff aus Quarz, Kalkstein oder Tonstein als Inertmaterial bzw. als Inertstoffe Polyacrylate, insbesondere wasserlösliche Copolymerisate mit M = 1.000 bis 6.000 oder Na-Polyacrylate mit M =10.000 bis 20.000 verwendet werden.

**11.** Verfahren nach einem oder mehreren der Ansprüche 1 bis 10,
dadurch **gekennzeichnet,**
daß die folgenden Trockenmischungen zur Herstellung der Nachfüllsuspension verwendet werden:

| | |
|---|---|
| 10 - 30 Mass.-% | aktivierter Ca-Bentonit ("Na-Bentonit") |
| 72 - 90 Mass.-% | Hüttensand (HOS) gemahlen auf 2000 bis 6000 $cm^2/g$ |
| 1 - 5 Mass.-% | Hüttensand-Anreger, wie Zemente, Kalke oder Calciumsulfate |
| 0 - 1 Mass.-% | Chelatbildner für mehrwertige Kationen |
| 0 - 5 Mass.-% | Dispergiermittel für die Aufnahme von Feinanteilen (< 1mm) des ausgebauten Bodens oder von zusätzlich zugegebenen feinen Inertstoffen (wie z.B. Kalkstein, Quarzsand, Altglas) |
| 0 - 4 Mass.-% | reaktive Kieselsäure. |

**12.** Verfahren nach einem oder mehreren der Ansprüche 1 bis 11,
dadurch **gekennzeichnet,**
daß Nachfüllsuspensionen mit Wasser-/Dichtwandmischung-Quotienten von 3,5 bis 1,5 verwendet werden.

**13.** Verfahren nach einem oder mehreren der Ansprüche 1 bis 12,
dadurch **gekennzeichnet,**
daß Nachfüllsuspensionen verwendet werden, die einen Wasser-Feststoff-Quotienten bis 0,25 aufweisen.

**14.** Verwendung einer Nachfüllsuspension bei einem Einphasenverfahren gemäß einem der vorhergehenden Ansprüche zur Herstellung einer Dichtungsschlitzwand.

**Claims**

**1.** Process for the production of a sealing diaphragm wall by the one-phase method, wherein the soil material is cut out of the side of a slot filled with a self-hardening sealing wall composition suspension using a diaphragm wall miller which is known per se, and is pumped out of the slot in a mixture with the sealing wall composition suspension as removed suspension, and the fine content of the mixture below a predetermined coarse grain size is used, together with new, freshly sheared sealing wall composition suspension, for preparation of a refill suspension, which is pumped into the slot in a refill amount corresponding to the soil material cut out.

**2.** Process according to claim 1, characterized in that the mixture pumped out of the slot is sieved.

**3.** Process according to claim 1 and/or 2, characterized in that the coarse grain content is washed out and the wash material is added to the fine content or the refill suspension.

**4.** Process according to one of claims 1 to 3, characterized in that a refill suspension which has a fine content in amounts of 400 to 1,800 $kg/m^3$ is used.

**5.** Process according to one or more of claims 1 to 4, characterized in that a fine content of which the grain size is less than 2 mm, in particular less than 1 mm, is used.

**6.** Process according to one or more of claims 1 to 5, characterized in that additional inert substances are used as fine contents for preparation of the refill suspension.

7. Process according to one or more of claims 1 to 6, characterized in that chelating agents are used in the preparation of the refill suspension in an amount which depends on the content of active, polyvalent cations present in the refill suspension, in order to ensure an adequate processability.

8. Process according to claim 7, characterized in that polyphosphates or hydroxycarboxylic acids, lactones thereof and alkali metal salts thereof, in particular sodium gluconate, are used as the chelating agents.

9. Process according to one or more of claims 1 to 8, characterized in that dispersing agents are used in the preparation of the refill suspension in an amount which depends on the content of inert fine contents, in order to ensure an adequate processability.

10. Process according to claim 9, characterized in that if fine sands or silt of quartz, limestone or clay stone is or are used as the inert material or materials, polyacrylates, in particular water-soluble copolymers of M = 1,000 to 6,000 or Na polyacrylates of M = 10,000 to 20,000, are used.

11. Process according to one or more of claims 1 to 10, characterized in that the following dry mixtures are used to prepare the refill suspension:

| | |
|---|---|
| 10 - 30 wt.% | activated Ca bentonite ("Na bentonite") |
| 72 - 90 wt.% | granulated blast furnace slag (HOS) ground to 2,000 to 6,000 cm$^2$/g |
| 1 - 5 wt.% | granulated blast furnace slag activator, such as cements, limes or calcium sulphates |
| 0 - 1 wt.% | chelating agent for polyvalent cations |
| 0 - 5 wt.% | dispersing agent for taking up the fine contents (< 1 mm) of the soil removed or the fine inert substances additionally added (such as e.g. limestone, quartz sand, waste glass) |
| 0 - 4 wt.% | reactive silicic acid. |

12. Process according to one or more of claims 1 to 11, characterized in that refill suspensions with water/sealing wall mixture quotients of 3.5 to 1.5 are used.

13. Process according to one or more of claims 1 to 12, characterized in that refill suspensions which have a water/solids quotient of up to 0.25 are used.

14. Use of a refill suspension in a one-phase process according to one of the preceding claims for the production of a sealing diaphragm wall.

**Revendications**

1. Procédé de fabrication d'une paroi étanche, moulée en tranchée, selon le procédé monophasé, le matériau de sol étant excavé de la paroi d'une tranchée, remplie d'une suspension de masse pour paroi étanche autodurcissante, à l'aide d'une fraise-scie à trancher connue en soi, et pompé dans un mélange avec la suspension de masse pour paroi étanche en tant que suspension de construction à partir de la tranchée, et les grains fins du mélange, situés au-dessous d'une dimension de gros grains prédéterminée, étant utilisés avec une nouvelle suspension de masse de paroi étanche fraîchement coupée, pour la fabrication d'une suspension de remplissage, dont une quantité de remplissage, correspondant à l'excavation du matériau de sol, est pompée dans la tranchée.

2. Procédé selon la revendication 1, caractérisé en ce que le mélange pompé à partir de la tranchée est tamisé.

3. Procédé selon la revendication 1 et/ou 2, caractérisé en ce que les gros grains sont rincés et le matériau de rinçage est ajouté aux grains fins ou à la suspension de remplissage.

4. Procédé selon l'une quelconque des revendications 1 à 3, caractérisé en ce' qu'une suspension de remplissage est utilisée, qui présente des grains fins en quantités allant de 400 à 1800 kg/m$^2$.

5. Procédé selon l'une quelconque ou plusieurs des revendications 1 à 4, caractérisé en ce que des grains fins-sont utilisés dont la dimension de grain se situe au-dessous de 2 mm, en particulier au-dessous de 1 mm.

6. Procédé selon l'une quelconque ou plusieurs des revendications 1 à 5, caractérisé en ce que des charges inertes supplémentaires sont utilisées en tant que grains fins pour la fabrication de la suspension de remplissage.

7. Procédé selon l'une quelconque ou plusieurs des revendications 1 à 6, caractérisé en ce que l'on utilise pendant la fabrication de la suspension de remplissage, pour assurer une possibilité de traitement suffisante, des chélateurs dont la quantité dépend de la teneur en cations actifs, polyvalents, présents dans la suspension de remplissage.

8. Procédé selon la revendication 7, caractérisé en ce que l'on utilise en tant que chélateur du polyphosphate ou des acides hydroxycarboniques, leurs lactones et leurs sels alcalins, en particulier du gluconate de sodium.

9. Procédé selon l'une quelconque ou plusieurs des revendications 1 à 8, caractérisé en ce que l'on utilise pendant la fabrication de la suspension de remplissage, pour assurer une possibilité de traitement suffisante, des agents dispersants, dont la quantité dépend de la teneur en grains fins inertes.

10. Procédé selon la revendication 9, caractérisé en ce qu'en cas d'utilisation de sables fins ou de limon de quartz, de pierre calcaire ou d'argilolite, des polyacrylates, en particulier des copolymères solubles dans l'eau, pour lesquels M = 1000 à 6000, ou des Na-polyacrylates, pour lesquels M = 10 000 à 20 000, sont utilisés en tant que matière inerte ou charge inerte.

11. Procédé selon l'une quelconque ou plusieurs des revendications 1 à 10, caractérisé en ce que les mélanges secs suivants sont utilisés pour la fabrication de la solution de remplissage:

| | |
|---|---|
| 10 à 30 % en masse | Ca-bentonite ("Na-bentonite") activée |
| 72 à 90 % en masse | laitier de haut fourneau (HOS) moulu à 2000 à 6000 cm$^2$/g |
| 1-5 % en masse | activateurs de laitier de haut fourneau, tels que des ciments, des calcaires ou des sulfates de calcium |
| 0 à 1 % en masse | chélateur pour cations polyvalents |
| 0 à 5 % en masse | agent dispersant pour l'absorption de grains fins (< 1 mm) du sol excavé ou des charges inertes fines ajoutées en plus (comme de la pierre calcaire, du sable siliceux, du verre récupéré) |
| 0 à 4 % en masse | acide silicique réactif. |

12. Procédé selon l'une quelconque ou plusieurs des revendications 1 à 11, caractérisé en ce que des suspensions de remplissage, ayant un quotient eau/mélange pour paroi étanche de 3,5 à 1,5, sont utilisées.

13. Procédé selon l'une quelconque ou plusieurs des revendications 1 à 12, caractérisé en ce que des suspensions de remplissage sont utilisées qui présentent un quotient eau/matière solide de 0,25.

14. Utilisation d'une suspension de remplissage au cours d'un procédé monophasé selon l'une quelconque des revendications précédentes pour la fabrication d'une paroi étanche moulée en tranchée.